# EUROPEAN PATENT SPECIFICATION

(11) **EP 1 816 437 B1**
(45) Date of publication and mention of the grant of the patent: **14.05.2008**
(21) Application number: 06101299.3
(22) Date of filing: 03.02.2006
(51) Int. Cl.: G01C 21/26, H04Q 7/38, G01S 5/00

(54) **Method of and device for visually representing a location and a status of a portable electronic device**
Verfahren und Vorrichtung zur visuellen Darstellung eines Standortes und eines Zustandes eines tragbaren elektronischen Gerätes
Procédé et dispositif de représentation visuelle d'un emplacement et d'une condition d'un appareil électronique portable

(43) Date of publication of application: 08.08.2007
(73) Proprietor: Research In Motion Limited, Waterloo, Ontario N2L 3W8 (CA)
(72) Inventor: Klassen, Gerhard D, N2T 1H7, Waterloo, (CA); Wisebourt, Shaul, N2V 2H8, Waterloo (CA); Fahmy, Samer, N2L 3P8, Waterloo (CA)
(74) Representative: Rickard, David John

(56) References cited:
- EP-A- 1 351 174
- WO-A-03/100452
- US-A1- 2002 115 450

## Description

A portion of the disclosure of this patent document contains material which is subject to copyright protection. The copyright owner has no objection to the facsimile reproduction by any one of the patent document or patent disclosure, as it appears in the Patent and Trademark Office patent file or records, but otherwise reserves all copyright rights whatsoever.

The present specification relates to a mapping application, in particular, a mapping application for visually representing location information.

Mapping software is widely used to provide a user with a visual location on a map that corresponds to a street address. MapQuest and Google each offer free access to their mapping software over the internet. In addition to using the mapping software to plot various addresses, it is also known to integrate the mapping software into other applications. One example of this is a real estate application in which multiple identifiers are plotted on a map of a particular city. In this case, each identifier visually represents a property that is for sale or for rent. By selecting an identifier, additional information about the property may be displayed, including contact information for the real estate agent associated with that property.

[0003a] US2002/115450 discloses a portable telephone apparatus for displaying a map with a unique icon on a display of the apparatus, the icon corresponding to a user of another portable telephone apparatus and the coordinates of the icon corresponding to actual coordinates of the other apparatus.

There are many applications that may be suitable for integration with mapping software. In each case, however, the plotted item is limited to being a building, a tourist attraction or a restaurant, for example. It is therefore desirable to plot the location of a movable item whose location may change over time.

GENERAL

According to an aspect of the present invention there is provided a method for visually representing information on a display of a portable electronic device including: receiving location coordinates from at least one other portable electronic device, receiving a status of a user of said at least one other portable electronic device, said status being sent from the at least one other portable electronic device, displaying a map on a display of the portable electronic device, displaying a visual identifier on the map, the location of the visual identifier corresponding to the location coordinate and displaying the status of the user of said at least one other portable electronic device on the display.

According to another aspect of the present invention there is provided a portable electronic device including: a processor for receiving location coordinates and status information of a user of at least one other portable electronic device, said location coordinates and status information being sent from said at least one other portable electronic device; a display for displaying a visual identifier on a map, a location of the visual identifier corresponding to the location coordinates and wherein an appearance of the visual identifier is selected to depict a status of the user of said at least one other portable electronic device.

### BRIEF DESCRIPTION OF THE DRAWINGS

The specification will be better understood with reference to the following Figures in which:

Figure 1 is a functional block diagram of a communication system for a portable electronic device according to an embodiment;

Figure 2 is a functional block diagram of certain components the portable electronic device of Figure 1; and

Figure 3 is a front view of a display of the portable electronic device of Figure 2.

### DESCRIPTION OF PREFERRED EMBODIMENTS

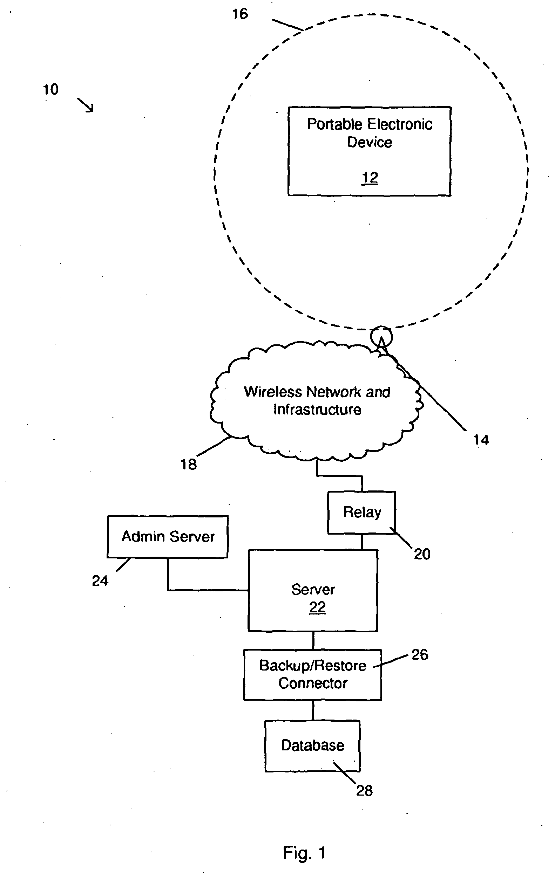

Referring to Figure 1, a functional block diagram of a communication system 10 and a portable electronic device 12 is generally shown. The portable electronic device 12 and the communication system 10 are operable to effect communications over a radio communications channel therebetween.

For the purpose of illustration, the communication system 10 is functionally represented in Figure 1 and includes a base station 14. Base station 14 defines a coverage area, or cell 16 within which communications between the base station 14 and the portable electronic device 12 can be effected. It will be appreciated that the portable electronic device 12 is movable within cell 16 and can be moved to coverage areas defined by other cells, including those that are not illustrated in the present example.

The base station 14 is part of a wireless network and infrastructure 18 that provides a link to the portable electronic device 12. The wireless network and infrastructure 18 includes additional base stations (not shown) that provide the other cells referred to above. Data is delivered to the portable electronic device 12 via wireless transmission from base station 14. Similarly, data is sent from the portable electronic device 12 via wireless transmission to the base stations 14.

Wireless networks and infrastructures include, for example, data-centric wireless networks, voice-centric wireless networks, or dual-mode wireless networks. For the purpose of the present exemplary embodiment, the wireless network and infrastructure 18 includes a dual-mode wireless network that supports both voice and data communications over the same physical base stations.

The communication system 10 further includes a relay device 20 that is connected to the wireless network and infrastructure 18 and to a server 22. It will be understood that the functions provided by the relay device 20 and the server 22 can be embodied in the same device. The server 22 is also connected to an administration server 24, as shown. The administration server 24 provides administrative services to and control over the server 22.

The server 22 is also functionally coupled through a connector 26 to a backup/restore database 28. Other connectors and databases can be provided, for example, for synchronization purposes. The connector 26 receives commands from the server 22. It will be understood that the connector 26 is a functional component and can be provided by way of an application on the server 22. The backup/restore database 28 is used for storing data records, including, for example, copies of Short Message Service (SMS) or Personal Identification Number (PIN) messages sent from the portable electronic device 12.

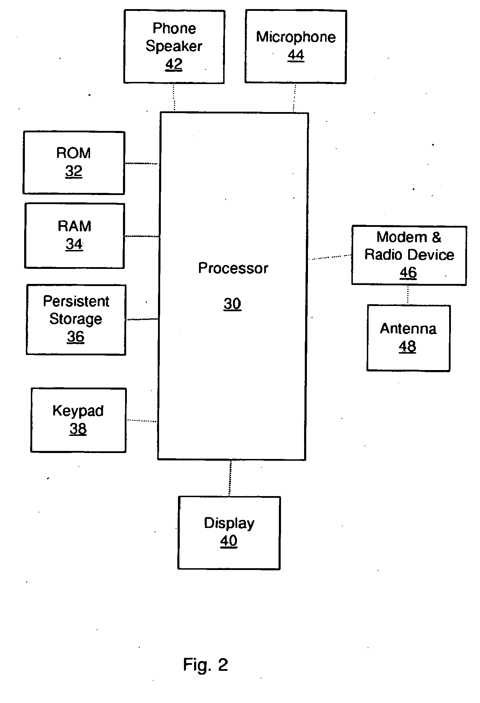

Referring now to Figure 2, a block diagram of certain components within the portable electronic device 12 is shown. In the present embodiment, the portable electronic device 12 is based on the computing environment and functionality of a wireless personal digital assistant (PDA). It will be understood, however, that the portable electronic device 12 is not limited to a wireless personal digital assistant. Other portable electronic devices are possible, such as cellular telephones, smart telephones, and laptop computers. Referring again to the present embodiment, the portable electronic device 12 is based on a microcomputer including a processor 30 connected to a read-only-memory (ROM) 32 that contains a plurality of applications executable by the processor 30 that enables the portable electronic device 12 to perform certain functions including, for example, PIN message functions, SMS message functions and cellular telephone functions. The processor 30 is also connected to a random access memory unit (RAM) 34 and a persistent storage device 36 which are responsible for various nonvolatile storage functions of the portable electronic device 12. The processor 30 receives input from various input devices including a keypad 38. The processor 30 outputs to various output devices including an LCD display 40. A microphone 44 and phone speaker 42 are connected to the processor 30 for cellular telephone functions. The processor 30 is also connected to a modem and radio device 46. The modem and radio device 46 is used to connect to wireless networks using an antenna 48. The modem and radio device 46 transmits and receives voice and data communications to and from the portable electronic device 12 through the antenna 48.

The portable electronic device 12 is operable to effect two way communication of voice and data. Thus, the portable electronic device 12 transmits and receives voice and data communications over the wireless network and infrastructure 18 via wireless communications with the base station 14 over a radio communications channel.

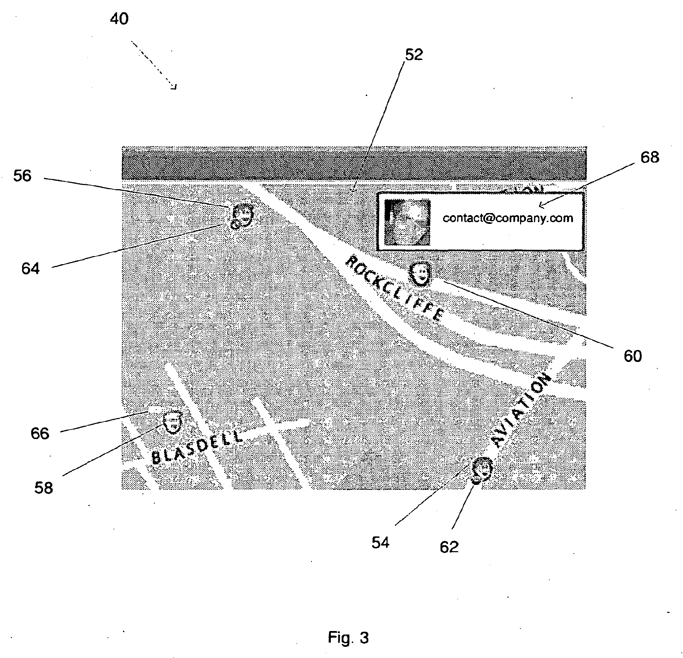

Referring to Figure 3, display screen 40 of portable electronic device 12 of a first user, is generally shown. A map 52 appears on the display 40. Avatars 54, 56, 58 and 60, which are located at various positions on the map 52, are also shown on the display 40. Each avatar 54, 56, 58, 60 is a visual identifier that represents a different portable electronic device user.

The map 52 is generated using a mapping software application, which uses mapping software to provide worldwide map data. The worldwide map data may be provided by NAVTEQ, Tele Atlas or another provider.

The position at which each avatar 54, 56, 58, 60 is plotted on the map 52 corresponds to the global location coordinates of each user's portable electronic device at a particular time. The location coordinates are determined locally in each portable electronic device using Global Positioning System (GPS) technology that is integrated into each portable electronic device. The location coordinates may alternatively be determined locally based on signal strength from cell towers, for example, or any other suitable type of positioning technology. Further, it will be appreciated by those skilled in the art that if a user's portable electronic device does not support GPS technology, the user may manually input location information into the portable electronic device.

Once the location coordinates have been determined locally, the coordinates are sent to the portable electronic device 12 of the first user, whose display 40 is shown in Figure 3. The coordinates may be sent following a request from the first user or at regular intervals without a request from the first user. Alternatively, the coordinates may be sent every time there is a change in the coordinates.

The status of each user is also visually represented on the display 40. As shown, avatar 54 is grayed out and includes a picture of a bee 62 to indicate that the user associated with this avatar 54 is busy; avatar 56 is grayed out and includes a picture of a do not disturb sign 64 to indicate that the user is not available; avatar 58 includes a picture of a callout 66 to indicate that the user is typing a message and avatar 60 is available. The status of each user is determined locally using algorithms on the portable electronic device. Determining the status of a portable electronic device user is well known in the art. For example, a user's status may be determined to be unavailable if the user does not respond to active notifications, which include emails, calendar events and instant messages, for a predetermined period of time.

Similar to the location coordinates, the status may be sent to the first user following a request from the first user, at regular intervals, or every time there is a change in the user status. The status information is generally sent to the portable electronic device of the first user at the same time as the location information, however, may alternatively be sent at a different time.

The portable electronic device users that are displayed on the map 52 are members of a contact list of the first user. The first user is authorized to receive and view information about each member and therefore is a member of the contact list of each of the other users. Similarly, the other users are authorized to receive and view information about the first user. The authorization process between a pair of portable electronic device users is well known in the art and therefore will not be described here.

The contact list is divided into a number of groups. The first user may not want to display the location of every contact in his/her contact list all of the time so it is possible to select one or more groups to display. For example, one group may be called "Project Leaders" and contain only those colleagues who are in charge of projects. It may be useful to plot only this group on a map in order to determine their respective locations at the time a meeting is scheduled to start. Similarly, other groups may be created and plotted on a map.

The information that is stored in the contact list with respect to a particular user typically includes: email address, phone number(s), facsimile number(s) and physical address(es). A profile including a preferred avatar of the contact may also be stored with the contact information.

The contact list is not limited to including only contacts who have completed an authorization process. Contacts for whom location and status information cannot be obtained may also be included on the contact list. In addition, if a user who is an authorized contact of the first user does not wish to have his/her location or status made available at a particular time, the user may block transmission of such information, if desired.

The first user is able to view additional information associated with an avatar 54, 56, 58, 60 by focusing on the avatar 54, 56, 58, 60 using a mouse or other selection device. As shown in Figure 3, avatar 60 is "in focus". This launches a window 68 that provides additional information from the contact list about the contact. In this case, a photograph and email address is provided, however, other information may alternatively be provided.

In use, the first user powers up portable electronic device 12 if it is not already powered up. The user then selects a group of contacts from a list of predefined groups that is provided. Following selection of the desired group, a location and status request is sent from the first user's portable electronic device to the portable electronic devices of each member of the selected group. When the requested information has been received, a map 52 is presented on the display 40 including the avatars 54, 56, 58, 60 of the respective contacts as shown in Figure 3. As previously described, the location and status may alternatively be broadcast from the portable electronic devices of the other users and received by the portable electronic device of the first user without a request.

Once the avatars 54, 56, 58, 60 have been plotted on the map 52, the first user may focus on any one of the avatars 54, 56, 58, 60 to bring up window 68, which includes further information associated with the avatar 54, 56, 58, 60.

The map 52 may be maintained on the display 40 at all times or alternatively, the map 52 may be launched each time the first user selects a "Map my Contacts" application from a menu. In the embodiment in which the map 52 is maintained on the display 40, the location coordinates and status are updated at regular intervals. The timing of the intervals may be set by the portable electronic device 12 of the first user. Alternatively, the location coordinates and status may only be updated when the first user clicks a "refresh" button.

In another embodiment, the avatars 54, 56, 58, 60 are replaced with customized avatars that are easily differentiable from one another. One type of customized avatar is a photograph of the respective user. The customized avatars may be associated with each user's profile. Alternatively, avatars may be assigned by the first user to override the avatars associated with the user profiles.

The status of a user may be represented in various ways. For example, if the avatar is a photograph of the user, a busy status may be indicated by graying out the photograph; a not available status may be indicated by drawing an X over the photograph, a typing status may be indicated by coloring the photograph yellow or another suitable color; and an available status may be indicated by simply displaying the original photograph. It will be appreciated by persons skilled in the art that other types of status may also be visually represented. For example, if a user has manually set their portable electronic device to "do not disturb" this may be represented in a different manner than a user who has simply not responded to calls or electronic messages for a period of time.

It will be appreciated that the location and status information of the other users is displayed on the map 52 regardless of the actual distance between the other users and the first user. As long as the portable electronic device 12 of the first user is able to receive signals from the other users, the information will be displayed.

A specific embodiment of the present embodiment has been shown and described herein. However, modifications and variations may occur to those skilled in the art. For example, although only a small number of avatars have been described, there are many types of avatars for differentiating users from one another and for indicating the status of each user that could be used. In addition, the map 52 that appears on the display 40 may be drawn from location source data using vector graphics. Other modifications and variations may occur within the scope of the invention which is defined uniquely by the appended claims.

## Claims

1. A method for visually representing information on a display (40) of a portable electronic device (12), said method comprising:
receiving location coordinates from at least one other portable electronic device;
receiving a status of a user of said at least one other portable electronic device, said status being sent from said at least one other portable device;
displaying a map (52) on said display of said portable electronic device (12), a position of a visual identifier (54,56,58,60) displayed on said map (52) corresponding to said location coordinates received from said at least one other portable electronic device; and
displaying said status of the user of said at least one other portable electronic device on said display (40).

2. A method as claimed in claim 1, wherein said location coordinates are determined using Global Positioning System technology.

3. A method as claimed in claim 1 or claim 2, wherein said map (52) is generated using mapping software.

4. A method as claimed in any one of claims 1 to 3, wherein said step of displaying said status on said display comprises selecting, modifying or arranging said visual identifier (54,56,58,60) to depict said status of said user of said at least one other portable electronic device.

5. A method as claimed in claim 4, wherein an appearance of the visual identifier (54,56,58,60) is selected, modified or arranged to depict said status.

6. A method as claimed in claim 4 or claim 5, wherein said status comprises any of: busy, not available, typing or available.

7. A method as claimed in any one of claims 1 to 6, wherein said visual identifier (54,56,58,60) is an avatar that is unique to the user of the at least one other portable electronic device.

8. A method as claimed in any one of claims 1 to 7, wherein focussing on said visual identifier (54,56,58,60) launches a window displaying contact information associated with the user of said at least one other portable electronic device (12).

9. A method as claimed in any one of claims 1 to 8, wherein a distance between said portable electronic device (12) and said at least one other portable electronic device is unlimited.

10. A method as claimed in any one of claims 1 to 9, wherein a user associated with said at least one other portable electronic device is a member of a list of contacts of a first user of the portable electronic device (12).

11. A method as claimed in any one of claims 1 to 10, wherein said location coordinates and said status are continuously updated.

12. A method as claimed in any one of claims 1 to 11, wherein said location coordinates correspond to an actual location of said at least one other portable electronic device.

13. A portable electronic device (12) comprising:
a processor (30) for receiving location coordinates and status information of a user of at least one other portable electronic device, said location coordinates and said status information being sent from said at least one other portable electronic device;
a display (40) for displaying a visual identifier on a map (52), a location of said visual identifier (54,56,58,60) corresponding to said location coordinates; and
wherein the processor (30) is arranged to select, modify or arrange said visual identifier to depict a status of the user of said at least one other portable electronic device (12) according to the received status information.

14. A portable electronic device (12) as claimed in claim 13, wherein the processor (30) is arranged to select, modify or arrange an appearance of the visual identifier (54,56,58,60) to depict said status of said at least one other portable electronic device according to the received status information.

15. A portable electronic device (12) as claimed in claim 13 or claim 14, wherein said device (12) is arranged to receive location coordinates that are determined using Global Positioning System technology.

16. A portable electronic device (12) as claimed in any one of claims 13 to 15, wherein said device (12) is arranged to receive continuously updated location coordinates and said status information.

17. A portable electronic device (12) as claimed in any one of claims 13 to 16, wherein said device (12) is arranged to receive status information corresponding to a user status comprising any of: busy, not available, typing or available.

18. A portable electronic device (12) as claimed in any one of claims 13 to 17, wherein said device (12) is arranged to use as a visual identifier (54,56,58,60) an avatar that is unique to the user of said at least one other portable electronic device.

19. A computer program product for visually representing information on a display of a portable electronic device (12), said computer program product comprising a computer readable medium embodying code means executable in a processor of a computing device for implementing the method of any one of claims 1 to 12.

## Patentansprüche

1. Verfahren zur visuellen Darstellung von Informationen auf einem Display (40) eines tragbaren elektronischen Gerätes (12), das Verfahren umfassend:
das Empfangen von Standortkoordinaten von mindestens einem anderen tragbaren elektronischen Gerät;
das Empfangen eines Zustandes eines Benutzers des mindestens einen anderen elektronischen Gerätes, wobei der Zustand von dem mindestens einen anderen tragbaren elektronischen Gerät gesendet wird;
das Anzeigen einer Landkarte (52) auf dem Display des tragbaren elektronischen Gerätes (12), wobei eine Position eines visuellen Identifikators (54, 56, 58, 60) auf der Landkarte (52) angezeigt wird, die den Standortkoordinaten entspricht, welche von dem mindestens einen anderen tragbaren elektronischen Gerät empfangen wurden; und
das Anzeigen des Zustandes des Benutzers des mindestens einen anderen tragbaren elektronischen Gerätes auf dem Display (40).

2. Verfahren gemäß Anspruch 1, wobei die Standortkoordinaten mithilfe der GPS-Technologie (Global Positioning System) ermittelt werden.

3. Verfahren gemäß Anspruch 1 oder Anspruch 2, wobei die Landkarte (52) mithilfe einer Landkartensoftware erzeugt wird.

4. Verfahren gemäß einem der Ansprüche 1 bis 3, wobei der Schritt des Anzeigens des Zustandes auf dem Display das Auswählen, Modifizieren oder Anordnen des visuellen Identifikators (54, 56, 58, 60) umfasst, um den Status des Benutzers des mindestens einen anderen tragbaren elektronischen Gerätes abzubilden.

5. Verfahren gemäß Anspruch 4, wobei ein Aussehen des visuellen Identifikators (54, 56, 58, 60) ausgewählt, modifiziert oder angeordnet wird, um den Zustand abzubilden.

6. Verfahren gemäß Anspruch 4 oder Anspruch 5, wobei der Zustand einen der folgenden Zustände umfasst: beschäftigt, nicht verfügbar, schreibend oder verfügbar.

7. Verfahren gemäß einem der Ansprüche 1 bis 6, wobei der visuelle Identifikator (54, 56, 58, 60) ein Avatar ist, welcher für den Benutzer des mindestens einen anderen tragbaren elektronischen Gerätes eindeutig ist.

8. Verfahren gemäß einem der Ansprüche 1 bis 7, wobei beim Fokussieren auf den visuellen Identifikator (54, 56, 58, 60) ein Fenster gestartet wird, in welchem Kontaktinformationen angezeigt werden, die mit dem Benutzer des mindestens einen anderen tragbaren elektronischen Gerätes (12) assoziiert sind.

9. Verfahren gemäß einem der Ansprüche 1 bis 8, wobei eine Distanz zwischen den tragbaren elektronischen Geräten (12) und dem mindestens einen anderen tragbaren elektronischen Gerät unbegrenzt ist.

10. Verfahren gemäß einem der Ansprüche 1 bis 9, wobei ein mit dem mindestens einen anderen tragbaren elektronischen Gerät assoziierter Benutzer ein Mitglied einer Liste von Kontakten eines ersten Benutzers des tragbaren elektronischen Gerätes (12) ist.

11. Verfahren gemäß einem der Ansprüche 1 bis 10, wobei die Standortkoordinaten und der Zustand kontinuierlich aktualisiert werden.

12. Verfahren gemäß einem der Ansprüche 1 bis 11, wobei die Standortkoordinaten einem tatsächlichen Standort des mindestens einen anderen elektronischen Gerätes entsprechen.

13. Tragbares elektronisches Gerät (12), umfassend:
einen Prozessor (30) zum Empfangen von Standortkoordinaten und Zustandsinformationen eines Benutzers von mindestens einem anderen tragbaren elektronischen Gerät, wobei die Standortkoordinaten und die Zustandsinformationen von dem mindestens einen anderen tragbaren elektronischen Gerät gesendet werden;
ein Display (40) zum Anzeigen eines visuellen Identifikators auf einer Landkarte (52), wobei eine Position des visuellen Identifikators (54, 56, 58, 60) den Standortkoordinaten entspricht; und
wobei der Prozessor (30) dazu eingerichtet ist, den visuellen Identifikator auszuwählen, zu modifizieren oder anzuordnen, um einen Zustand des Benutzers des mindestens einen anderen tragbaren elektronischen Gerätes (12) entsprechend den empfangenen Statusinformationen abzubilden.

14. Tragbares elektronisches Gerät (12) gemäß Anspruch 13, wobei der Prozessor (30) dazu eingerichtet ist, ein Aussehen des visuellen Identifikators (54, 56, 58, 60) auszuwählen, zu modifizieren oder anzuordnen, um den Zustand des mindestens einen anderen tragbaren elektronischen Gerätes entsprechend den empfangenen Statusinformationen abzubilden.

15. Tragbares elektronisches Gerät (12) gemäß Anspruch 13 oder Anspruch 14, wobei das Gerät (12) dazu eingerichtet ist, Standortkoordinaten zu empfangen, die mithilfe der GPS-Technologie (Global Positioning System) ermittelt werden.

16. Tragbares elektronisches Gerät (12) gemäß einem der Ansprüche 13 bis 15, wobei das Gerät (12) dazu eingerichtet ist, kontinuierlich aktualisierte Standortkoordinaten und die Statusinformationen zu empfangen.

17. Tragbares elektronisches Gerät (12) gemäß einem der Ansprüche 13 bis 16, wobei das Gerät (12) dazu eingerichtet ist, Statusinformationen zu empfangen, die einem Benutzerzustand entsprechen, der einen der folgenden Zustände umfasst: beschäftigt, nicht verfügbar, schreibend oder verfügbar.

18. Tragbares elektronisches Gerät (12) gemäß einem der Ansprüche 13 bis 17, wobei das Gerät (12) dazu eingerichtet ist, einen Avatar als einen visuellen Identifikator (54, 56, 58, 60) zu verwenden, der für den Benutzer des mindestens einen anderen tragbaren elektronischen Gerätes eindeutig ist.

19. Computerprogrammprodukt zur visuellen Darstellung von Informationen auf einem Display eines tragbaren elektronischen Gerätes (12), wobei das Computerprogrammprodukt ein computerlesbares Medium mit darauf verkörperten Programmcodemitteln umfasst, die von einem Prozessor eines Computergerätes ausgeführt werden können, um das Verfahren gemäß einem der Ansprüche 1 bis 12 zu implementieren.

## Revendications

1. Un procédé destiné à représenter visuellement des informations sur un écran (40) d'un dispositif électronique portatif (12), ledit procédé comprenant :
la réception de coordonnées géographiques provenant d'au moins un autre dispositif électronique portatif,
la réception d'un état d'un utilisateur dudit au moins un autre dispositif électronique portatif, ledit état étant envoyé à partir dudit au moins un autre dispositif électronique portatif,
l'affichage d'une carte (52) sur ledit écran dudit dispositif électronique portatif (12), une position d'un identifiant visuel (54, 56, 58, 60) affiché sur ladite carte (52) correspondant auxdites coordonnées géographiques reçues dudit au moins un autre dispositif électronique portatif, et
l'affichage dudit état de l'utilisateur dudit au moins un autre dispositif électronique portatif sur ledit écran (40).

2. Un procédé selon la Revendication 1, où lesdites coordonnées géographiques sont déterminées au moyen d'une technologie GPS (système de géopositionnement par satellite).

3. Un procédé selon la Revendication 1 ou 2, où ladite carte (52) est générée au moyen d'un logiciel de cartographie.

4. Un procédé selon l'une quelconque des Revendications 1 à 3, où ladite opération d'affichage dudit état sur ledit écran comprend la sélection, la modification ou l'agencement dudit identifiant visuel (54, 56, 58, 60) de façon à représenter ledit état dudit utilisateur dudit au moins un autre dispositif électronique portatif.

5. Un procédé selon la Revendication 4, où un aspect dudit identifiant visuel (54, 56, 58, 60) est sélectionné, modifié ou agencé de façon à représenter ledit état.

6. Un procédé selon la Revendication 4 ou 5, où ledit état comprend l'un des états suivants : occupé, non disponible, en cours de saisie ou disponible.

7. Un procédé selon l'une quelconque des Revendications 1 à 6, où ledit identifiant visuel (54, 56, 58, 60) est un avatar qui est unique à l'utilisateur du au moins un autre dispositif électronique portatif.

8. Un procédé selon l'une quelconque des Revendications 1 à 7, où la sélection dudit identifiant visuel (54, 56, 58, 60) ouvre une fenêtre affichant des informations de contact associées à l'utilisateur dudit au moins un autre dispositif électronique portatif (12).

9. Un procédé selon l'une quelconque des Revendications 1 à 8, où une distance entre ledit dispositif électronique portatif (12) et ledit au moins un autre dispositif électronique portatif est illimitée.

10. Un procédé selon l'une quelconque des Revendications 1 à 9, où un utilisateur associé audit au moins un autre dispositif électronique portatif est un membre d'une liste de contacts d'un premier utilisateur du dispositif électronique portatif (12).

11. Un procédé selon l'une quelconque des Revendications 1 à 10, où lesdites coordonnées géographiques et ledit état sont actualisés en permanence.

12. Un procédé selon l'une quelconque des Revendications 1 à 11, où lesdites coordonnées géographiques correspondent à une position effective dudit au moins un autre dispositif électronique portatif.

13. Un dispositif électronique portatif (12) comprenant :
un processeur (30) destiné à la réception de coordonnées géographiques et d'informations d'état provenant d'un utilisateur d'au moins un autre dispositif électronique portatif, lesdites coordonnées géographiques et lesdites informations d'état étant envoyées à partir dudit au moins un autre dispositif électronique portatif,
un écran (40) destiné à l'affichage d'un identifiant visuel sur une carte (52), une position dudit identifiant visuel (54, 56, 58, 60) correspondant auxdites coordonnées géographiques, et
où le processeur (30) est agencé de façon à sélectionner, modifier ou agencer ledit identifiant visuel de façon à représenter un état de l'utilisateur dudit au moins un autre dispositif électronique portatif (12) en fonction des informations d'état reçues.

14. Un dispositif électronique portatif (12) selon la Revendication 13, où le processeur (30) est agencé de façon à sélectionner, modifier ou agencer un aspect de l'identifiant visuel (54, 56, 58, 60) de façon à représenter ledit état dudit au moins un autre dispositif électronique portatif en fonction des informations d'état reçues.

15. Un dispositif électronique portatif (12) selon la Revendication 13 ou 14, où ledit dispositif (12) est agencé de façon à recevoir des coordonnées géographiques qui sont déterminées au moyen d'une technologie GPS (système de géopositionnement par satellite).

16. Un dispositif électronique portatif (12) selon l'une quelconque des Revendications 13 à 15, où ledit dispositif (12) est agencé de façon à recevoir en permanence des coordonnées géographiques actualisées et lesdites informations d'état.

17. Un dispositif électronique portatif (12) selon l'une quelconque des Revendications 13 à 16, où ledit dispositif (12) est agencé de façon à recevoir des informations d'état correspondant à un état d'utilisateur comprenant l'un des états suivants : occupé, non disponible, en cours de saisie ou disponible.

18. Un dispositif électronique portatif (12) selon l'une quelconque des Revendications 13 à 17, où ledit dispositif (12) est agencé de façon à utiliser en tant qu'identifiant visuel (54, 56, 58, 60) un avatar qui est unique à l'utilisateur dudit au moins un autre dispositif électronique portatif.

19. Un programme informatique destiné à représenter visuellement des informations sur un écran d'un dispositif électronique portatif (12), ledit programme informatique comprenant un support lisible par ordinateur incorporant du code exécutable sur un processeur d'un dispositif informatique afin de mettre en oeuvre le procédé selon l'une quelconque des Revendications 1 à 12.
